(19) Europäisches Patentamt
European Patent Office
Office européen des brevets

(11) EP 0 973 636 B1

(12) FASCICULE DE BREVET EUROPEEN

(45) Date de publication et mention de la délivrance du brevet:
**02.01.2003 Bulletin 2003/01**

(21) Numéro de dépôt: **98917249.9**

(22) Date de dépôt: **26.03.1998**

(51) Int Cl.$^7$: **B29D 11/00**, G02B 1/04

(86) Numéro de dépôt international:
**PCT/FR98/00621**

(87) Numéro de publication internationale:
**WO 98/045108 (15.10.1998 Gazette 1998/41)**

(54) **ARTICLE TRANSPARENT A GRADIENT D'INDICE DE REFRACTION RADIAL ET SON PROCEDE DE FABRICATION**

TRANSPARENTER GEGENSTAND MIT RADIALEM BRECHUNGSINDEXGRADIENTEN UND VERFAHREN ZUR HERSTELLUNG

TRANSPARENT ARTICLE WITH RADIAL REFRACTIVE INDEX GRADIENT AND PROCESS FOR ITS MANUFACTURE

(84) Etats contractants désignés:
**DE FR GB IT**

(30) Priorité: **10.04.1997 FR 9704427**

(43) Date de publication de la demande:
**26.01.2000 Bulletin 2000/04**

(73) Titulaire: **ESSILOR INTERNATIONAL COMPAGNIE GENERALE D'OPTIQUE**
**94227 Charenton cédex (FR)**

(72) Inventeurs:
- **KOIKE, Yasuhiro**
  **Kanagawa 225 (JP)**
- **CABEZA, Stéphane**
  **F-94300 Vincennes (FR)**
- **GRAND-CLEMENT, Didier**
  **F-94300 Vincennes (FR)**

(74) Mandataire: **Catherine, Alain et al**
**Cabinet Harlé & Phélip**
**7, rue de Madrid**
**75008 Paris (FR)**

(56) Documents cités:
**EP-A- 0 130 838**
**GB-A- 1 362 757**
**US-A- 4 022 855**

- **PATENT ABSTRACTS OF JAPAN vol. 011, no. 039 (M-559), 5 février 1987 & JP 61 206631 A (NIPPON SHEET GLASS CO LTD;OTHERS: 01), 12 septembre 1986,**
- **PATENT ABSTRACTS OF JAPAN vol. 009, no. 330 (M-442), 25 décembre 1985 & JP 60 162611 A (NIHON ITA GLASS KK;OTHERS: 01), 24 août 1985,**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 973 636 B1

## Description

La présente invention concerne de manière générale des articles transparents à gradient d'indice de réfraction radial (GRIN) tels que par exemple des lentilles optiques et des fibres optiques, et plus particulièrement de tels articles transparents présentant une faible abberration chromatique, tels que définis dans le préambule de la revendication 1. De tels articles sont connus du document EP-A- 130 838.

Un article optique se caractèrise par sa géométrie, son épaisseur et son indice de réfraction; ce dernier est souvent homogène. Un gradient d'indice de réfraction dans un matériau optique offre un degré supplémentaire de liberté quant à l'utilisation de l'article. En effet, le gradient d'indice permet de faire varier le chemin optique des rayons indépendamment de la géométrie de l'article.

On distingue généralement quatre types de gradients d'indice de réfraction, chacun dépendant de la symétrie présente dans l'article :

- le gradient d'indice axial : l'indice varie suivant une direction axiale donnée de l'article; il est homogène dans tout plan perpendiculaire à cette direction;
- le gradient d'indice radial : l'indice varie suivant la distance à un axe donné; il est homogène sur toute surface cylindrique de rayon donné et de même axe que le gradient. Si l'indice décroît du centre de l'article vers la périphérie (GRIN positif), on obtient un effet positif de lentille (convergence). Inversement, si l'indice croît du centre de l'article vers la périphérie (GRIN négatif), on obtient un effet négatif de lentille (divergence);
- le gradient d'indice sphérique : l'indice varie suivant la distance à un point donné; les surfaces d'iso-indice sont sphériques;
- l'indice invariant dans un déplacement en translation, c'est-à-dire que l'indice varie dans une surface plane perpendiculaire à une direction axiale définie de l'article.

On a démontré une équivalence optique entre une lentille plan-convexe (ou plan-concave) à indice homogène et une lentille à gradient d'indice parabolique radial dont l'indice décroît du centre vers le bord (ou du bord vers le centre).

La réalisation d'articles optiques à gradient d'indice de réfraction a notamment pour objectif de concevoir des systèmes optiques plus simples de performance égale à celle obtenue avec des systèmes constitués d'éléments optiques à indice homogène. Une telle réalisation permet de fabriquer par exemple des systèmes optiques à multiples éléments dont le nombre serait ainsi réduit, ou bien de réaliser des verres ou des lentilles de correction de moindre épaisseur et/ou de géométrie plus simple.

En outre, les articles optiques à gradient d'indice radial ou sphérique offrent de nombreuses applications en opto-électronique ou dans les télécommunications, lorsque la distribution d'indice est quasi parabolique ou parabolique. On obtient des propriétés de focalisation de la lumière à très courte distance, très recherchée dans les photocopieurs, les lecteurs de disques laser ou les fibres optiques.

Des lentilles à gradient d'indice et leurs procédés de fabrication sont décrits, entre autres, dans les documents EP-0407294, EP-0504011 et PR-9502266.

Un procédé de fabrication de fibres optiques à gradient d'indice radial est décrit dans l'article de Oktsuka Koike (Applied Optics, 24 (24), pages 4316 à 4320 (1985)).

Dans ce qui suit, on se concentrera particulièrement sur des articles ayant un gradient d'indice obtenu par diffusion radiale d'un monomère précurseur d'un polymère 2 (indice de réfraction $n_2$, nombre d'Abbe $\nu_2$) dans une matrice polymère 1 (indice de réfraction $n_1$, nombre d'Abbe $\nu_1$).

Le chromatisme d'un article transparent est non seulement lié à la géométrie de l'article, mais également au fait que l'indice de réfraction d'un matériau transparent est variable en fonction de la longueur d'onde de la lumière qui le traverse.

De façon générale, l'indice de réfraction n d'un matériau transparent augmente lorsque la longeur d'onde de la lumière décroît, c'est-à-dire que l'indice de réfraction du matériau est plus élevé pour le bleu que pour le rouge.

D'une manière générale, la mesure des propriétés de dispersion de la lumière d'une lentille mince homogène satisfait à l'équation :

$$(1) \qquad \frac{\delta f}{f} + \frac{\delta n}{n-1} = O$$

où f est la distance focale,

n est l'indice de réfraction, et

δn la différence de l'indice de réfraction entre 2 longueurs d'onde de la lumière.

Le terme $\frac{\delta n}{n-1}$ est appelé le facteur de dispersion et est lié à l'inverse du nombre d'Abbe $\nu_D$.

Classiquement, ce nombre d'Abbe est évalué en utilisant l'indice de réfraction du matériau pour différentes

longueurs d'onde, par l'équation

$$\frac{1}{\nu_D} = \frac{n_F - n_C}{n_D - 1},$$

où

$n_F$ est l'indice de réfraction du matériau pour une lumière de longueur d'onde λ= 486 nm (bleu),
$n_C$ est l'indice de réfraction du matériau pour une lumière de longueur d'onde λ = 656 nm (rouge), et
$n_D$ est l'indice de réfraction du matériau pour la raie D du sodium.

D'autre part, la puissance d'un article transparent à gradient d'indice dépend en partie de la forme géométrique de l'article comme dans un verre homogène ($P_H$) et en partie du gradient d'indice ($P_{GRIN}$), c'est-à-dire

$$P\ total = P_H + P_{GRIN}$$

On peut donc définir un nombre d'Abbe caractérisant le chromatisme de la puissance liée au gradient d'indice et le chromatisme total de l'article est la somme des deux contributions :

$$\text{chromatisme axial} = \frac{P_H}{\nu_D} + \frac{P_{GRIN}}{\nu_{GRIN}}$$

L'aberration chromatique paraxiale longitudinale (PAC) d'une lentille est définie par la relation :

$$(2) \qquad PAC = \frac{h^2}{u'}\left(\frac{P_H}{\nu_A} + \frac{P_{GRIN}}{\nu_{GRIN}}\right)$$

où
h est la hauteur du rayon paraxial marginal,
u' est l'angle de sortie du rayon paraxial,
$P_H$ est la puissance d'une lentille d'indice de réfraction $n_{DA}$,
$n_{DA}$ est l'indice de réfraction pour la raie D au centre de la lentille,
$\nu_A$ est le nombre d'Abbe de la lentille d'indice de réfraction $n_{DA}$,
$P_{GRIN}$ est la puissance liée au gradient d'indice de la lentille, et
$\nu_{GRIN}$ le nombre d'Abbe de la lentille à gradient d'indice.
De la relation (2), il résulte que si l'on diminue la valeur du facteur $\frac{P_{GRIN}}{\nu_{GRIN}}$, on abaisse la valeur de PAC.

Dans le cas d'une lentille à gradient d'indice radial de type quasi parabolique, l'indice de réfraction en fonction du rayon r de la lentille peut être exprimé par un polynôme :

$$n_\lambda(r) = n_{1\lambda} + N_{1\lambda}\, r^2 + N_{2\lambda}\, r^4 + ....$$

où r est le rayon de la lentille,
$n_\lambda$ (r) est l'indice de réfraction en fonction du rayon pour une longueur d'onde particulière,
$n_{1\lambda}$ est l'indice de réfraction pour r = o, c'est-à-dire sur l'axe optique de la lentille.

Pour des raisons de simplification, on considère que $n_{1\lambda}$ est l'indice de réfraction à la longueur d'onde particulière du polymère transparent constituant la matrice, c'est-à-dire $n_{1\lambda} = n_{DA}$ dans la formule (2) précédente.

$N_{i\lambda}$ sont des constantes qui décrivent le gradient d'indice pour une longueur d'onde particulière.

Dans le cas de rayons paraxiaux, c'est-à-dire faisant un angle faible, généralement ≤ 15°, par rapport à l'axe de la lentille, on peut, par approximation, considérer le gradient d'indice comme parabolique et exprimer l'indice de réfraction en fonction du rayon, par la relation :

$$(3) \qquad N_\lambda\,(r) = N_{1\lambda} + N_{1\lambda} r^2 .$$

c'est-à-dire pour la raie F $n_F(r) = n_{1F} + N_{1F} r^2$ (3')

pour la raie C $n_C(r) = n_{1C} + N_{1C} r^2$ (3")

pour la raie D $n_D(r) = n_{1D} + N_{1D} r^2$ (3"')

Dans le domaine paraxial et pour une lentille ayant une épaisseur e, la puissance du gradient d'indice est exprimée par la relation :

$$P_{GRIN} = -2\, N_{1D}\, e. \qquad (4)$$

A partir des relations (1) et (4), on en déduit que :

$$\frac{\delta f}{f} = \frac{\delta N_1}{N_{1D}} = \frac{N_{1F} - N_{1C}}{N_{1D}} = \frac{1}{\nu_{GRIN}} \qquad (5)$$

où $N_{1F}$, $N_{1C}$ et $N_{1D}$ sont les facteurs constants de $r^2$ dans les équations 3', 3" et 3"'.

On en déduit le nombre d'Abbe GRIN en combinant les relations (3), (3'), (3"), (3"') et l'équation (5), et en admettant que la concentration en matériau 2 (matériau diffusé dans le matériau 1 de la matrice) est 100% au rayon maximal, c'est-à-dire à l'extrémité radiale de la lentille, le nombre d'Abbe du gradient d'indice peut être exprimé par la relation :

$$\nu_{GRIN} = \frac{(n_{2D} - n_{1D})\, \nu_1\, \nu_2}{(n_{2D} - 1)\, \nu_1 - (n_{1D} - 1)\, \nu_2} \qquad (6)$$

où $n_{1D}$ est l'indice de réfraction du matériau 1 pour la raie D du sodium, et $\nu_1$ est le nombre d'Abbe de ce matériau 1,

$n_{2D}$ est l'indice de réfraction du matériau 2 pour la raie D du sodium, et $\nu_2$ est le nombre d'Abbe du matériau 2.

Comme indiqué précédemment, pour diminuer la valeur du chromatisme due à la contribution du gradient d'indice GRIN (relation (2)), on cherche à réduire la valeur du facteur $\frac{P_{GRIN}}{\nu_{GRIN}}$ et donc à accroître la valeur du nombre d'Abbe $\nu_{GRIN}$ du gradient d'indice.

$\nu_{GRIN}$ est maximal lorsque le facteur

$(n_{2D} - 1)\, \nu_1 - (n_{1D} - 1)\, \nu_2 \rightarrow O$, c'est-à-dire

$$\nu_1 \rightarrow \frac{\nu_2\, (n_{1D} - 1)}{(n_{2D} - 1)} \qquad (7)$$

En ce qui concerne les propriétés chromatiques d'articles transparents à gradient d'indice, on pourra utilement se référer à l'article "Model for the chromatic properties of gradient-index glass" par Danette P. Ryan-Howard et Duncan T. Moore. Applied Optics/Vol. 24, N° 24/15 Décembre 1985 et au document US-A-5 361 166.

Dans le cas d'une lentille à gradient d'indice négatif, c'est-à-dire une lentille dont l'indice de réfraction croît du centre de la lentille à sa périphérie, il faut faire diffuser dans le matériau formant la matrice de la lentille, un matériau d'indice de réfraction plus élevé que le matériau de la matrice. Bien évidemment, pour l'obtention d'un gradient positif, il faut réaliser l'inverse, c'est-à-dire faire diffuser un matériau de bas indice de réfraction dans un matériau de haut indice de réfraction.

Les matériaux d'indice de réfraction élevé ont généralement un nombre d'Abbe plus faible que les matériaux d'indice moins élevé.

Pour accroître $\nu_{GRIN}$ dans l'équation (7), une première solution consisterait à utiliser des couples de matériaux haut indice et bas indice dans lesquels le matériau de haut indice de réfraction aurait un nombre d'Abbe élevé et le matériau de bas indice aurait un faible nombre d'Abbe.

Les matériaux haut indice à nombre d'Abbe élevé sont rares, généralement difficiles à obtenir et coûteux. Il en est de même des matériaux bas indices de faible nombre d'Abbe.

Une autre solution serait de modifier (diminuer) le nombre d'Abbe du matériau de bas indice par l'incorporation d'un agent modificateur sans nuire de façon significative, c'est-à-dire sans augmenter notablement, l'indice de réfraction du matériau bas indice.

En général, les matériaux à haut indice de réfraction ont un indice de réfraction ≥ 1,56 et les matériaux à bas

indice de réfraction un indice de réfraction ≤ 1,53.

La présente invention a donc pour but de réaliser un article transparent à gradient d'indice radial ayant une aberration chromatique paraxiale longitudinale réduite.

La présente invention a également pour objet un procédé de fabrication d'un tel article.

Selon l'invention, on réalise un article transparent à gradient d'indice radial comprenant une matrice en un premier matériau polymère transparent ayant un premier indice de réfraction $n_1$ et un premier nombre d'Abbe $\nu_1$, un second matériau polymère transparent diffusé dans le premier matériau polymère pour réaliser le gradient d'indice radial et ayant un second indice de réfraction $n_2$ différent du premier indice et un second nombre d'Abbe $\nu_2$, et une quantité effective d'un agent de modification du nombre d'Abbe qui abaisse d'au moins 10%, de préférence d'au moins 15%, et mieux d'au moins 20%, la valeur du nombre d'Abbe de celui du premier ou du second matériau polymère ayant l'indice de réfraction de plus faible valeur.

De préférence, l'agent de modification du nombre d'Abbe a un faible nombre d'Abbe et un indice de réfraction aussi faible que possible afin d'éviter un accroissement notable de l'indice de réfraction du matériau de faible indice.

Comme les matériaux ayant un faible nombre d'Abbe ont en général un indice de réfraction élevé, en pratique, les agents de modification disponibles ayant un nombre d'Abbe égal ou inférieur à 30 ont un indice de réfraction compris entre 1,6 et 1,7.

L'agent de modification du nombre d'Abbe a pour effet une diminution relativement plus élevée du nombre d'Abbe du matériau de plus faible indice de réfraction par rapport à l'accroissement relatif de l'indice de réfraction de ce même matériau.

En général, on peut utiliser jusqu'à 30% en poids, de préférence de 10 à 25% en poids, d'agent de modification du nombre d'Abbe par rapport au poids total du matériau de plus faible indice de réfraction.

Les agents de modification du nombre d'Abbe utiles dans la présente invention sont de deux types, les agents réactifs et les agents non-réactifs.

Les agents réactifs sont des composés qui réagissent avec le ou les composés précurseurs du matériau de plus faible indice de réfraction, cependant que les agents non-réactifs sont des composés, généralement aromatiques, qui ne réagissent pas avec le ou les composés précurseurs du matériau de plus faible indice de réfraction.

Des agents de modification du nombre d'Abbe, selon la présente invention, sont indiqués dans le tableau ci-après.

| Agent de modification du nombre d'Abbe | Indice de réfraction | Nombre d'Abbe |
|---|---|---|
| Réactif | | |
| Pentachlorophényl méthacrylate | 1,608 | 22,5 |
| O-chlorostyrène | 1,6018 | 21 |
| p-divinyl benzène | 1,615 | 20 |
| N-vinyl phtalimide | 1,62 | 24,1 |
| 2-naphtyl méthacrylate | 1,6298 | 24 |
| 1-naphtyl carbinyl méthacrylate | 1,63 | 25 |
| Fluorényl méthacrylate | 1,6319 | 23,1 |
| Vinyl thiophène | 1,6376 | 29 |
| 1-naphtyl méthacrylate | 1,6411 | 20,5 |
| Diméthacrylate de plomb | 1,645 | 28 |
| Vinyl naphtalène | 1,6818 | 20,9 |
| Vinyl carbazole | 1,683 | 18,8 |
| Non réactif | | |
| Dibenzofuranne | - | - |
| Benzalacétophénone | - | - |
| Naphtalène | - | - |
| Benzalazine | - | - |
| Anhydride benzoïque | - | - |
| Dibenzophénone | - | - |

Pour les agents de modification non réactifs, il n'est pas possible de mesurer directement l'indice de réfraction et le nombre d'Abbe de ces composés, mais on a déterminé l'indice de réfraction et le nombre d'Abbe de mélanges de polyméthacrylate de méthyle (PMMA) ayant initialement un indice de réfraction $n_D$ = 1,492 et un nombre d'Abbe $\nu_D$ = 55 avec les divers agents non réactifs. Les résultats sont indiqués dans le tableau ci-dessous.

| Agent de modification du nombre d'Abbe | | | | | | PMMA | n | ν |
|---|---|---|---|---|---|---|---|---|
| Benzalacétophénone | Benzalazine | Anhydride benzoïque | Dibenzophénone | Dibenzoranne | Naphtalène | | | |
| 5 g | - | - | - | - | - | 100 g | 1,501 | 45 |
| - | 4,2 g | - | - | - | - | 100 g | 1,5004 | 45 |
| - | - | 11 g | - | - | - | 100 g | 1,5034 | 47 |
| - | - | - | 5 g | - | - | 100 g | 1,4984 | 47,6 |
| - | - | - | - | 12,5 g | - | 100 g | 1,51 | 36 |
| - | - | - | - | - | 16,66 g | 100 g | 1,51 | 42 |

Comme indiqué précédemment, la matrice de l'article à gradient d'indice radial peut être constituée d'un matériau polymère transparent de bas indice et le gradient d'indice obtenu par diffusion et polymérisation dans la matrice d'un matériau polymérisable de haut indice ou l'inverse.

Les matériaux polymères transparents de bas indice de réfraction utiles dans la présente invention, sont de préférence des polymères résultant de la polymérisation de monomères monofonctionnels tels que les alkyl(méth) acrylates et les halogénoalkyl(méth)acrylates tels que les fluoroalkyl(méth)acrylates. On recommande particulièrement les alkylméthacrylates et les fluoroalkylméthacrylates tels que le méthacrylate de méthyle, le méthacrylate de butyle et le méthacrylate de trifluorométhyle.

Parmi les matériaux polymères transparents de haut indice utiles dans la présente invention, on peut citer le polystyrène et les poly(méth)acrylates d'aryle ou d'aryle halogéné, les polymères obtenus à partir de poly(méth)acrylates contenant du soufre, les (méth)acrylates de polythiols, les monomères contenant du sélénium. Les matériaux polymères transparents de haut indice recommandés sont le polystyrène, le poly(méthacrylate de benzyle) et le poly (méthacrylate de chlorobenzyle), et le polymère de bis[(2-méthacryloylthio)éthyl] sulfure.

Les polymères de haut indice préférés ont un nombre d'Abbe de 35 ou plus.

De préférence encore, la matrice est constituée d'un matériau polymère transparent de bas indice résultant de la polymérisation de monomères monofonctionnels, car l'utilisation de tels monomères facilite la diffusion des monomères précurseurs du matériau polymère du gradient d'indice.

La présente invention concerne également un procédé de fabrication d'un article transparent à gradient d'indice radial qui consiste à :

(a) réaliser un mélange d'une quantité effective d'un agent de modification de nombre d'Abbe et de monomères précurseurs d'un premier matériau polymère transparent ayant un premier indice de réfraction et un premier nombre d'Abbe, l'agent de modification du nombre d'Abbe abaissant le nombre d'Abbe du premier matériau polymère transparent d'au moins 10%;
(b) obtenir une quantité prédéterminée de monomères précurseurs d'un second matériau polymère transparent ayant un second indice de réfraction supérieur au premier indice de réfraction et un second nombre d'Abbe;
(c) placer entre les parties d'un moule en deux parties, soit le produit résultant de l'étape (a), soit le produit résultant de l'étape (b);
(d) partiellement polymériser le produit disposé dans le moule pour obtenir un gel;
(e) faire diffuser dans le gel obtenu à l'étape (d) celui restant des produits obtenus à l'étape (a) ou (b); et
(f) achever la polymérisation pour obtenir l'article transparent à gradient d'indice radial.

De préférence, la polymérisation partielle de l'étape (d) et la polymérisation finale de l'étape (f) sont des photopolymérisations, et au moins celui des produits de l'étape (a) ou (b) qui est gélifié à l'étape (b) comprend en outre un initiateur de photopolymérisation.

On peut utiliser tout photoinitiateur connu pour la photopolymérisation de monomères (méth)acrylates. Parmi les initiateurs de photopolymérisation utilisables dans le procédé de la présente invention, on peut citer :

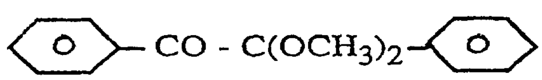 (Irgacure® 651) ,

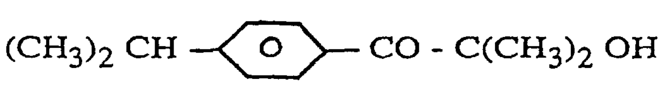 (Darocur® 1116) ,

et

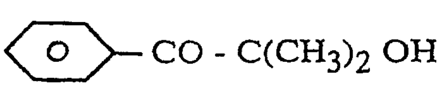 (Darocur® 1173).

Les produits des étapes (a) et (b) du procédé comprennent de préférence également un agent de réticulation dans les proprotions usuelles. Parmi les agents de réticulation utiles- dans la présente invention, on peut citer les monomères poly(méth)acrylates tels que le pentaérythritol triacrylate, le triméthylolpropanetriacrylate, le tripropylèneglycoldiacrylate, le 1,6-hexanedioldiacrylate, le di(méth) acrylate d'éthylèneglycol et les di(méth)acrylates de polyéthylèneglycol.

De préférence, le produit de l'étape (a) du procédé, c'est-à-dire le mélange de l'agent de modification du nombre d'Abbe, des monomères précurseurs du matériau polymère de bas indice, d'un agent de réticulation et d'un initiateur de photopolymérisation, est disposé dans le moule à l'étape (c) et partiellement photopolymérisé pour former un gel. On fait alors ensuite diffuser les monomères précurseurs du matériau polymère de haut indice dans le gel avant de procéder à l'achèvement de la photopolymérisation.

Les exemples suivants illustrent la présente invention sans toutefois la limiter. Dans les exemples, sauf indication contraire, tous les pourcentages et parties sont exprimés en poids.

## Exemple 1 exemple comparatif A

On réalise un mélange photopolymérisable comprenant 90% en poids de méthacrylate de méthyle et 10% en poids de diméthacrylate de polyéthylèneglycol 400. A ce mélange, on ajoute 0,1% en poids de Darocur® 1173. A ce mélange de précurseurs de polymère bas indice, on ajoute 15% en poids de naphtalène comme agent de modification du nombre d'Abbe. Le mélange obtenu est disposé dans un moule plan en verre en deux parties et prépolymérisé pour former un gel par irradiation pendant 25 minutes au moyen d'une lampe UV Hand ($\lambda$ = 320 - 400 nm) disposée à 15 cm, ce qui correspond à une puissance de 0,7 mW/cm$^2$. Une fois le gel obtenu, on retire le joint latéral du moule et on immerge le gel contenu entre les deux parties du moule dans du méthacrylate de benzyle (précurseur du polymère haut indice). Le poly(méthacrylate de benzyle) a un indice de réfraction de 1,568 et un nombre d'Abbe de 38), et on fait diffuser le méthacrylate de benzyle dans le gel à 30°C pendant 48 heures.

On obtient le profil d'indice du produit sous forme de gel résultant au moyen de l'appareil et du procédé de déflectométrie à franges de la demande de brevet FR-95 09411 pour les longueurs d'onde $\lambda$ = 543,5 nm et $\lambda$ = 632,8 nm. Les profils mesurés sont ensuite développés sous la forme d'un polynôme ($\Delta = N_{1\lambda}r^2$) et on calcule $\nu_{GRIN}$ "LINEAIRE" en déterminant les coefficients $N_1$ aux longueurs d'onde $\lambda$ = 480 nm, $\lambda$ = 546,1 nm, $\lambda$ = 589,3 nm, $\lambda$ = 643,8 nm par une méthode d'approximation aux moindres carré. On détermine $\nu_{GRIN}$ "THEORIQUE" à partir des indices de réfraction et nombre d'Abbe des matériaux de départ. Les indices et nombres d'ABBE des différents constituants ont été mesurés au réfractomètre aux raies F, C et D.

A titre de comparaison, (Exemple comparatif A) on réalise, comme précédemment, un produit gélifié analogue au produit ci-dessus, mais ne contenant pas de naphtalène. On détermine de façon similaire $\nu_{GRIN}$ "THEORIQUE" et $\nu_{GRIN}$ "LINEAIRE".

Les résultats sont indiqués dans le tableau ci-après.

| | Puissance GRIN | $\nu_{GRIN}$ "THEORIQUE" | $\nu_{GRIN}$ "LINEAIRE" |
|---|---|---|---|
| Exemple 1 | - 0,25 | 23 | 25 |
| Exemple comparatif A | - 0,33 | 14 | 17 |

Bien que les valeurs des nombres d'Abbe théoriques et déterminés expérimentalement soient différentes, les résultats expérimentaux conservent l'ordre de grandeur de l'augmentation du nombre d'Abbe déterminée théoriquement.

Les figures 1 et 2 représentent les variations de $N_1$ en fonction de la longueur d'onde pour les produits de l'exemple 1 et de l'exemple comparatif A, respectivement.

L'utilisation de naphtalène comme agent de modification du nombre d'Abbe accroît $\nu_{GRIN}$ d'au moins 40% et par suite diminue la valeur de PAC.

L'appareil et le procédé de déflectométrie à franges utilisés pour déterminer les profils d'indice, sont décrits dans la demande de brevet français FR 95 09411 du 2 août 1995.

Brièvement, l'appareil comprend des moyens d'éclairage d'un composant optique à mesurer par un rayonnement de front d'onde connu, des moyens de déflectométrie du rayonnement après sa réflexion ou sa transmission par le composant optique à mesurer, des moyens pour matérialiser un rayon de référence et des moyens de mesure de l'aberration transverse du rayon de référence après sa réflexion ou sa transmission par le composant optique à mesurer.

Le procédé de déflectométrie mis en oeuvre avec l'appareil consiste à éclairer un composant optique, à mesurer par un rayonnement de front d'onde connu et à analyser les franges générées dans les moyens de déflectométrie par le rayonnement réfléchi ou transmis par le composant. Ainsi, on mesure par un rayon réfléchi ou transmis par le composant la phase réduite sur les moyens de déflectométrie, on mesure l'aberration transverse du rayon et on calcule la phase absolue du rayon sur les moyens de déflectométrie à partir de la mesure de la phase réduite, en levant l'indétermination grâce à la mesure de l'aberration transverse.

On peut également utiliser pour la détermination des profils d'indice, des appareils et procédés classiques

tels que décrits dans les documents FR-A-2 710 162 et EP-A-0644411.

**Exemples 2 à 61 et exemples comparatifs B à L**

On a déterminé théoriquement les nombres d'Abbe, $\nu_{GRIN}$ "THEORIQUE", pour divers matériaux polymères à haut et bas indice de réfraction et divers agents de modification.

Les résultats sont donnés dans le tableau ci-dessous.

| EXEMPLE No. | MATRICE BAS INDICE | POLYMERE HAUT INDICE | | | |
|---|---|---|---|---|---|
| | | Polystyrène<br>n = 1,592 - ν = 30 | Polybenzyl-méthacrylate<br>n= 1,565 - ν=36,5 | Poly(o-chlorobenzyl) méthacrylate<br>n = 1,5823 - ν = 37 | Polydi(éthylène sulfure) dithiométhacrylate<br>n = 1,62 - ν = 36 |
| Exemples comparatifs B à E | Méthylméthacrylate<br>n = 1,49<br>ν = 54 | Δn = 0,102<br>$ν_{GRIN}$ = 9,6 | Δn = 0,076<br>$ν_{GRIN}$ = 12 | Δn = 0,0923<br>$ν_{GRIN}$ = 14 | Δn = 0,13<br>$ν_{GRIN}$ = 16,5 |
| Exemples 2 à 4 | Méthylméthacrylate / naphtyl méthacrylate (80/20)<br>n = 1,52; ν = 38,5 | Δn = 0,072<br>$ν_{GRIN}$ = 11,6 | Δn = 0,048<br>$ν_{GRIN}$ = 26 | Δn = 0,0623<br>$ν_{GRIN}$ = 28 | |
| Exemples 5 à 7 | Méthylméthacrylate / naphtalène (80/20)<br>n = 1,51; ν = 40 | Δn = 0,082<br>$ν_{GRIN}$ = 13 | Δn = 0,055<br>$ν_{GRIN}$ = 23 | | Δn = 0,11<br>$ν_{GRIN}$ = 27,5 |
| Exemples 8 à 10 | Méthylméthacrylate / N-vinylcarbazole (85/15)<br>n = 1,52; ν = 38 | Δn = 0,072<br>$ν_{GRIN}$ = 13,3 | Δn = 0,045<br>$ν_{GRIN}$ = 29 | | Δn = 0,1<br>$ν_{GRIN}$ = 32,5 |
| Exemples 11 à 13 | Méthylméthacrylate / N-vinylcarbazole (80/20)<br>n = 1,526; ν = 37 | Δn = 0,066<br>$ν_{GRIN}$ = 12 | Δn = 0,042<br>$ν_{GRIN}$ = 37 | Δn = 0,0563<br>$ν_{GRIN}$ = 37 | |

| EXEMPLE No. | MATRICE BAS INDICE | POLYMERE HAUT INDICE | | | |
|---|---|---|---|---|---|
| | | Polystyrène<br>n = 1,592 - ν = 30 | Polybenzyl-méthacrylate<br>n= 1,565 - ν=36,5 | Poly(o-chlorobenzyl) méthacrylate<br>n = 1,5823 - ν = 37 | Polydi(éthylène sulfure) dithiométhacrylate<br>n = 1,62 - ν = 36 |
| Exemples 14 à 16 | Méthylméthacrylate/dibenzofuranne (85/15)<br>n = 1,515 ; ν = 39 | $\Delta n$ = 0,077<br>$\nu_{GRIN}$ = 13 | $\Delta n$ = 0,05<br>$\nu_{GRIN}$ = 25 | | $\Delta n$ = 0,105<br>$\nu_{GRIN}$ = 29,5 |
| Exemples 17 à 19 | Méthylméthacrylate / dibenzofuranne (80/20)<br>n = 1,515; ν = 39,5 | $\Delta n$ = 0,077<br>$\nu_{GRIN}$ = 11,5 | $\Delta n$ = 0,053<br>$\nu_{GRIN}$ = 23 | $\Delta n$ = 0,0673<br>$\nu_{GRIN}$ = 25 | |
| Exemples 20 à 22 | Méthylméthacrylate / benzalazine (80/20)<br>n = 1,5005; ν = 45 | $\Delta n$ = 0,915<br>$\nu_{GRIN}$ = 10,6 | $\Delta n$ = 0,0675<br>$\nu_{GRIN}$ = 16 | $\Delta n$ = 0,0818<br>$\nu_{GRIN}$ = 18 | |
| Exemples 23 à 25 | Méthylméthacrylate / benzalazine (90/10)<br>n = 1,51; ν = 39 | $\Delta n$ = 0,082<br>$\nu_{GRIN}$ = 13,6 | $\Delta n$ = 0,055<br>$\nu_{GRIN}$ = 25,5 | | $\Delta n$ = 0,11<br>$\nu_{GRIN}$ = 30 |
| Exemples comparatifs F à I | N-butylméthacrylate<br>n = 1,4831; ν = 48 | $\Delta n$ = 0,1089<br>$\nu_{GRIN}$ = 11 | $\Delta n$ = 0,0819<br>$\nu_{GRIN}$ = 15 | $\Delta n$ = 0,0992<br>$\nu_{GRIN}$ = 16,8 | $\Delta n$ = 0,1369<br>$\nu_{GRIN}$ = 20 |

| EXEMPLE No. | MATRICE BAS INDICE | POLYMERE HAUT INDICE | | | |
|---|---|---|---|---|---|
| | | Polystyrène<br>n = 1,592 - ν = 30 | Polybenzyl-méthacrylate<br>n= 1,565 - ν=36,5 | Poly(o-chlorobenzyl) méthacrylate<br>n = 1,5823 - ν = 37 | Polydi(éthylène sulfure) dithiométhacrylate<br>n = 1,62 - ν = 36 |
| Exemples 26 à 28 | N-butylméthacrylate/naphtyl méthacrylate<br>(80/20)<br>n = 1,511 ; ν = 37,5 | Δn = 0,081<br>$\nu_{GRIN}$ = 13,4 | Δn = 0,054<br>$\nu_{GRIN}$ = 34,4 | Δn = 0,0713<br>$\nu_{GRIN}$ = 35 | |
| Exemples 29 à 31 | N-butylméthacrylate / naphtalène<br>(80/20)<br>n = 1,505; ν = 39 | Δn = 0,087<br>$\nu_{GRIN}$ = 16 | Δn = 0,06<br>$\nu_{GRIN}$ = 26,2 | | Δn = 0,115<br>$\nu_{GRIN}$ = 30 |
| Exemples 32 à 34 | N-butylméthacrylate /<br>N-vinylcarbazole<br>(85/15)<br>n = 1,512 ν = 36,5 | Δn = 0,08<br>$\nu_{GRIN}$ = 17,7 | Δn = 0,053<br>$\nu_{GRIN}$ = 43 | | Δn = 0,108<br>$\nu_{GRIN}$ = 40 |
| Exemples 35 à 37 | N-butylméthacrylate /<br>N-vinylcarbazole<br>(80/20)<br>n = 1,52; ν = 35,5 | Δn = 0,072<br>$\nu_{GRIN}$ = 14 | Δn = 0,045<br>$\nu_{GRIN}$ = 72,3 | Δn = 0,0623<br>$\nu_{GRIN}$ = 57 | |
| Exemples 38 à 40 | N-butylméthacrylate /<br>dibenzofuranne<br>(85/15)<br>n = 1,501; ν = 40 | Δn = 0,091<br>$\nu_{GRIN}$ = 15 | Δn = 0,064<br>$\nu_{GRIN}$ = 23,7 | | Δn = 0,119<br>$\nu_{GRIN}$ = 28 |

| EXEMPLE No. | MATRICE BAS INDICE | POLYMERE HAUT INDICE | | | |
|---|---|---|---|---|---|
| | | Polystyrène<br>n = 1,592 - v = 30 | Polybenzyl-méthacrylate<br>n= 1,565 - v=36,5 | Poly(o-chlorobenzyl) méthacrylate<br>n = 1,5823 - v = 37 | Polydi(éthylène sulfure) dithiométhacrylate<br>n = 1,62 - v = 36 |
| Exemples 41 à 43 | N-butylméthacrylate/dibenzofuranne (80/20)<br>n = 1,507 ; v = 38,3 | Δn = 0,085<br>$v_{GRIN}$ = 13 | Δn = 0,058<br>$v_{GRIN}$ = 28,5 | Δn = 0,0753<br>$v_{GRIN}$ = 30 | |
| Exemples 44 à 46 | N-butylméthacrylate / benzalazine (80/20)<br>n = 1,496; v = 41 | Δn = 0,098<br>$v_{GRIN}$ = 12,6 | Δn = 0,069<br>$v_{GRIN}$ = 21,7 | Δn = 0,0863<br>$v_{GRIN}$ = 23,7 | |
| Exemples 47 à 49 | N-butylméthacrylate / benzalazine (90/10)<br>n = 1,501 v = 40 | Δn = 0,091<br>$v_{GRIN}$ = 16 | Δn = 0,064<br>$v_{GRIN}$ = 23,7 | | Δn = 0,119<br>$v_{GRIN}$ = 30 |
| Exemples comparatifs J à L | Trifluoro éthylméthacrylate<br>n = 1,43; v = 65 | Δn = 0,162<br>$v_{GRIN}$ = 12,6 | Δn = 0,135<br>$v_{GRIN}$ = 15,3 | | Δn = 0,019<br>$v_{GRIN}$ = 18,4 |
| Exemples 50 à 52 | Trifluoro éthylméthacrylate/ N-vinylcarbazole (85/15)<br>n = 1,487; v = 37 | Δn = 0,105<br>$v_{GRIN}$ = 16,4 | Δn = 0,078<br>$v_{GRIN}$ = 37 | | Δn = 0,133<br>$v_{GRIN}$ = 37 |

| EXEMPLE No. | MATRICE BAS INDICE | POLYMERE HAUT INDICE | | | |
|---|---|---|---|---|---|
| | | Polystyrène<br>n = 1,592 - ν = 30 | Polybenzyl-méthacrylate<br>n= 1,565 - ν=36,5 | Poly(o-chlorobenzyl) méthacrylate<br>n = 1,5823 - ν = 37 | Polydi(éthylène sulfure) dithiométhacrylate<br>n = 1,62 - ν = 36 |
| Exemples 53 à 55 | Trifluoroéthylméthacrylate/ dibenzofuranne (85/15)<br>n = 1,477 ; ν = 42 | Δn = 0,077<br>$\nu_{GRIN}$ = 14 | Δn = 0,05<br>$\nu_{GRIN}$ = 23 | | Δn = 0,105<br>$\nu_{GRIN}$ = 26,5 |
| Exemples 56 à 58 | Trifluoroéthylméthacrylate/ naphtalène (80/20)<br>n = 1,476; ν = 40 | Δn = 0,116<br>$\nu_{GRIN}$ = 14 | Δn = 0,089<br>$\nu_{GRIN}$ = 26,7 | | Δn = 0,144<br>$\nu_{GRIN}$ = 29,5 |
| Exemples 59 à 61 | Trifluoroéthylméthacrylate / benzalazine (90/10)<br>n = 1,47 ν = 41 | Δn = 0,122<br>$\nu_{GRIN}$ = 14 | Δn = 0,095<br>$\nu_{GRIN}$ = 25,2 | | Δn = 0,15<br>$\nu_{GRIN}$ = 28,5 |

**Revendications**

1. Article transparent à gradient d'indice de réfraction radial, comprenant une matrice en un premier matériau polymère transparent ayant un premier indice de réfraction $n_1$ et un premier nombre d'Abbe $\nu_1$, un second matériau polymère transparent diffusé dans le premier matériau polymère pour réaliser le gradient d'indice radial et ayant un second indice de réfraction $n_2$ différent du premier indice de réfraction et un second nombre d'Abbe $\nu_2$, **caractérisé en ce qu'**il comprend en outre une quantité effective d'un agent de modification du nombre d'Abbe qui abaisse d'au moins 10%, de préférence d'au moins 15%, et mieux d'au moins 20%, la valeur du nombre d'Abbe de celui du premier ou du second matériau polymère ayant l'indice de réfraction de plus faible valeur.

2. Article transparent selon la revendication 1, **caractérisé en ce que** l'agent de modification du nombre d'Abbe a un nombre d'Abbe inférieur ou égal à 30.

3. Article transparent selon la revendication 1 ou 2, **caractérisé en ce qu'**il comprend jusqu'à 30% en poids, de préférence 10 à 25% en poids, d'agent de modification du nombre d'Abbe par rapport au poids total du matériau polymère ayant l'indice de réfraction de plus faible valeur.

4. Article transparent selon l'une quelconque des revendications précédentes, **caractérisé en ce que** les agents de modification du nombre d'Abbe sont choisis parmi des monomères monofonctionnels réactifs avec des monomères précurseurs de celui des premier et second matériaux polymères transparents qui a l'indice de réfraction de plus faible valeur et des composés aromatiques non réactifs.

5. Article tranparent selon la revendication 4, **caractérisé par le fait que** les agents réactifs de modification du nombre d'Abbe sont choisis parmi le chlorobenzhydrylméthacrylate, le pentachlorophénylméthacrylate, l'o-chlorostyrène, le p-divinylbenzène, le N-vinylphtalimide, le 2-naphtylméthacrylate, le 1-naphtylcarbinylméthacrylate, le fluoronylméthacrylate, le vinylthiophène, le 1-naphtylméthacrylate, le diméthacrylate de plomb, le vinylnaphtalène et le N-vinylcarbazole.

6. Article transparent selon la revendication 4, **caractérisé par le fait que** les agents non-réactifs de modification du nombre d'Abbe sont choisis parmi le dibenzofuranne, la benzalacétophénone, le naphtalène, la benzalazine, l'anhydride benzoïque et la dibenzophénone.

7. Article transparent selon l'une quelconque des revendications précédentes, **caractérisé par le fait que** l'agent de modification du nombre d'Abbe a un indice de réfraction d'environ 1,6.

8. Article transparent selon l'une quelconque des revendications précédentes, **caractérisé en ce que** le premier matériau polymère transparent est le matériau ayant l'indice de réfraction de plus faible valeur.

9. Article transparent selon l'une quelconque des revendications 1 à 7, **caractérisé en ce que** le second matériau polymère transparent est le matériau ayant l'indice de réfraction de plus faible valeur.

10. Article transparent selon l'une quelconque des revendications précédentes, **caractérisé en ce que** le matériau polymère transparent d'indice de réfraction de plus faible valeur est un poly(méth)acrylate d'alkyle ou d'halogénoalkyle.

11. Article transparent selon l'une quelconque des revendications précédentes, **caractérisé en ce que** le matériau polymère transparent d'indice de réfraction de plus haute valeur est le polystyrène, un poly(méth)acrylate d'aryle ou un poly(méth)acrylate d'aryle halogéné.

12. Procédé de fabrication d'un article transparent à gradient d'indice de réfraction radial, consistant à :

    (a) réaliser un mélange d'une quantité effective d'un agent de modification du nombre d'Abbe et de monomères précurseurs d'un premier matériau polymère transparent ayant un premier indice de réfraction et un premier nombre d'Abbe, l'agent de modification du nombre d'Abbe abaissant le nombre d'Abbe du premier matériau polymère transparent d'au moins 10%;
    (b) obtenir une quantité prédéterminée de monomères précurseurs d'un second matériau polymère transparent ayant un second indice de réfraction supérieur au premier indice de réfraction et un second nombre d'Abbe;

(c) placer entre les parties d'un moule en deux parties, soit le produit résultant de l'étape (a), soit le produit résultant de l'étape (b);
(d) partiellement polymériser le produit disposé dans le moule pour obtenir un gel;
(e) faire diffuser dans le gel obtenu à l'étape (d) celui restant des produits obtenus à l'étape (a) ou (b); et
(f) achever la polymérisation pour obtenir l'article transparent à gradient d'indice radial.

**13.** Procédé selon la revendication 12, **caractérisé en ce que** les polymérisations des étapes (d) et (f) sont des photopolymérisations et **en ce qu'**au moins le mélange obtenu à l'étape (a) comprend un initiateur de photopolymérisation.

**14.** Procédé selon la revendication 12 ou 13, **caractérisé en ce qu'**au moins le mélange obtenu à l'étape (a) comprend en outre un agent de réticulation.

**15.** Procédé selon l'une quelconque des revendications 12 à 14, **caractérisé en ce que** le mélange de l'étape (a) est disposé entre les deux parties du moule.

**16.** Procédé selon l'une quelconque des revendications 12 à 15, **caractérisé en ce que** la quantité d'agent de modification du nombre d'Abbe représente jusqu'à 30%, de préférence 10 à 25% en poids, par rapport au poids des monomères précurseurs du premier matériau polymère transparent.

**17.** Procédé selon l'une quelconque des revendications 12 à 16, **caractérisé en ce que** les monomères précurseurs du premier matériau polymère transparent sont choisis parmi les (méth) acrylates d'alkyle et d'halogénoalkyle.

**18.** Procédé selon l'une quelconque des revendications 12 à 17, **caractérisé en ce que** les monomères précurseurs du second matériau polymère transparent sont choisis parmi : le styrène, les (méth)acrylates d'aryle et les (méth) acrylates d'aryle halogéné.

**19.** Procédé selon l'une quelconque des revendications 12 à 18, **caractérisé en ce que** l'agent de modification du nombre d'Abbe a un nombre d'Abbe égal ou inférieur à 30.

**20.** Procédé selon l'une quelconque des revendications 12 à 19, **caractérisé en ce que** l'agent de modification du nombre d'Abbe est choisi parmi le chlorobenzhydrylméthacrylate, le pentachlorophénylméthacrylate, l'o-chlorostyrène, le p-divinylbenzène, le N-vinylphtalimide, le 2-naphtylméthacrylate, le 1-naphtylcarbinylméthacrylate, le fluoronylméthacrylate, le vinylthiophène, le 1-naphtylméthacrylate, le diméthacrylate de plomb, le vinylnaphtalène et le N-vinylcarbazole.

**21.** Procédé selon l'une quelconque des revendications 12 à 19, **caractérisé en ce que** l'agent de modification du nombre d'Abbe est choisi parmi le dibenzofuranne, la benzalacétophénone, le naphtalène, la benzalazine, l'anhydride benzoïque et la dibenzophénone.

## Patentansprüche

**1.** Durchsichtiger Gegenstand mit radialem Brechungsindexgradienten, umfassend eine Matrix aus einem ersten durchsichtigen Polymermaterial mit einem ersten Brechungsindex $n_1$ und einer ersten Abbe-Zahl $\nu_1$, ein zweites durchsichtiges Polymermaterial, welches zur Darstellung des radialen Indexgradienten in dem ersten Polymermaterial verteilt ist und einen von dem ersten Brechungsindex unterschiedlichen zweiten Brechungsindex $n_2$ und eine zweite Abbe-Zahl $\nu_2$ aufweist, **dadurch gekennzeichnet, daß** er ferner eine effektive Menge eines Abbe-Zahl-Modifikators umfaßt, der den Wert der Abbe-Zahl desjenigen des ersten oder des zweiten Polymermaterials, welches einen Brechungsindex mit geringerem Wert aufweist, um zumindest 10 %, bevorzugt um zumindest 15 % und insbesondere bevorzugt um zumindest 20 % absenkt.

**2.** Durchsichtiger Gegenstand nach Anspruch 1, **dadurch gekennzeichnet, daß** der Abbe-Zahl-Modifikator über eine Abbe-Zahl von kleiner oder gleich 30 verfügt.

**3.** Durchsichtiger Gegenstand nach Anspruch 1 oder 2, **dadurch gekennzeichnet, daß** er bis zu 30 Gewichtsprozent, insbesondere bevorzugt von 10 bis 25 Gewichtsprozent an Abbe-Zahl-Modifikator mit Bezug auf das Gesamtgewicht an Polymermaterial mit geringerem Brechungsindex umfaßt.

**4.** Durchsichtiger Gegenstand nach einem der vorangegangenen Ansprüche, **dadurch gekennzeichnet, daß** die Abbe-Zahl-Modifikatoren ausgewählt sind unter monofunktionellen reaktiven Monomeren mit Vorläufermonomeren desjenigen der ersten und zweiten durchsichtigen Polymermaterialien, welches über einen Brechungsindex mit geringerem Wert verfügt, sowie unter aromatischen nicht reaktiven Zusammensetzungen.

**5.** Durchsichtiger Gegenstand nach Anspruch 4, **dadurch gekennzeichnet, daß** die reaktiven Abbe-Zahl-Modifikatoren ausgewählt sind unter Chlorbenzhydrylmethacrylat, Pentachlorphenylmethacrylat, *o*-Chlorstyrol, *p*-Divinylbenzol, N-Vinylphthalimid, 2-Naphthylmethacrylat, 1-Naphthylcarbinylmethacrylat, Fluorenylmethacrylat, Vinylthiophen, 1-Naphthylmethacrylat, Bleidimethacrylat, Vinylnaphthalin und N-Vinylcarbazol.

**6.** Durchsichtiger Gegenstand nach Anspruch 4, **dadurch gekennzeichnet, daß** die nicht reaktiven Abbe-Zahl-Modifikatoren ausgewählt sind unter Dibenzofuran, Benzalacetophenon, Naphthalin, Benzalazin, Benzoesäureanhydrid und Dibenzophenon.

**7.** Durchsichtiger Gegenstand nach einem der vorangegangenen Ansprüche, **dadurch gekennzeichnet, daß** der Abbe-Zahl-Modifikator über einen Brechungsindex von etwa 1,6 verfügt.

**8.** Durchsichtiger Gegenstand nach einem der vorangegangenen Ansprüche, **dadurch gekennzeichnet, daß** das erste durchsichtige Polymermaterial das Material ist, welches über einen Brechungsindex mit geringerem Wert verfügt.

**9.** Durchsichtiger Gegenstand nach einem der Ansprüche 1 bis 7, **dadurch gekennzeichnet, daß** das zweite durchsichtige Polymermaterial das Material ist, welches über einen Brechungsindex mit geringerem Wert verfügt.

**10.** Transparenter oder durchsichtiger Gegenstand nach einem der vorangegangenen Ansprüche, **dadurch gekennzeichnet, daß** das durchsichtige oder transparente Polymermaterial mit einem Brechungsindex von geringerem Wert ein Polyalkylmethacrylat, oder ein Polyhalogenalkylmethacrylat ist.

**11.** Transparenter oder durchsichtiger Gegenstand nach einem der vorangegangen Ansprüche, dadurch gekennzeichet, daß das durchsichtige oder transparente Polymermaterial mit einem Brechungsindex vom höheren Wert Polystyrol, ein Polyarylmethacrylat oder ein halogeniertes Polyarylmethacrylat ist.

**12.** Verfahren zur Herstellung eines durchsichtigen Gegenstandes mit radialem Brechungsindexgradienten, bestehend in:

a) Darstellen einer Mischung einer effektiven Menge eines Abbe-Zahl-Modifikators mit Vorläufermonomeren eines ersten durchsichtigen Polymermaterials mit einem ersten Brechungsindex und einer ersten Abbe-Zahl, wobei der Abbe-Zahl-Modifikator die Abbe-Zahl des ersten durchsichtigen Polymermateriales um zumindest 10 % absenkt;

b) Erhalten einer vorbestimmten Menge an Vorläufermonomeren eines zweiten durchsichtigen Polymermaterials mit einem zweiten über dem ersten Brechungsindex liegenden zweiten Brechungsindex und einer zweiten Abbe-Zahl;

c) Anordnen entweder des aus dem Schritt (a) resultierenden Produktes oder des aus dem Schritt (b) resultierenden Produktes zwischen den Teilen einer zweiteiligen Form;

d) teilweises Polymerisieren des in der Form angeordneten Produktes zur Erhaltung eines Gels;

e) Eindiffundieren oder Verteilen des verbleibenden, im Schritt (a) bzw. (b) erhaltenen Produktes in das im Schritt (d) erhaltene Gel;

f) Vervollständigen der Polymerisation zur Erhaltung des durchsichtigen Gegenstandes mit radialem Indexgradienten.

**13.** Verfahren nach Anspruch 12, **dadurch gekennzeichnet, daß** die Polymerisationen der Schritte (d) und (f) Photopolymerisationen sind, und daß zumindest die im Schritt (a) erhaltene Mischung einen Photopolymerisationsinitiator umfaßt.

**14.** Verfahren nach Anspruch 12 oder 13, **dadurch gekennzeichnet, daß** zumindest die im Schritt (a) erhaltene Mischung ferner ein Mittel zur Vernetzung umfaßt.

**15.** Verfahren nach einem der Ansprüche 12 bis 14, **dadurch gekennzeichnet, daß** die Mischung des Schrittes (a) zwischen den zwei Teilen der Form angeordnet wird.

**16.** Verfahren nach einem der Ansprüche 12 bis 15, **dadurch gekennzeichnet, daß** die Menge an Abbe-Zahl-Modifikator bis zu 30 %, insbesondere bevorzugt von 10 bis 25 % an Gewicht mit Bezug auf die Gewichte an Vorläufermonomeren des ersten durchsichtigen oder transparenten Polymermaterials ausmacht.

**17.** Verfahren nach einem der Ansprüche 12 bis 16, **dadurch gekennzeichnet, daß** die Vorläufermonomere des ersten durchsichtigen Polymermateriales ausgewählt sind unter Alkylmethacrylaten und Halogenalkylmethacrylaten.

**18.** Verfahren nach einem der Ansprüche 12 bis 17, **dadurch gekennzeichnet, daß** die Vorläufermonomere des zweiten durchsichtigen Polymermateriales ausgewählt sind unter: Styrol, Arylmethacrylaten und halogenierten Arylmethacrylaten.

**19.** Verfahren nach einem der Ansprüche 12 bis 18, **dadurch gekennzeichnet, daß** der Abbe-Zahl-Modifikator über eine Abbe-Zahl von kleiner gleich 30 verfügt.

**20.** Verfahren nach einem der Ansprüche 12 bis 19, **dadurch gekennzeichnet, daß** der Abbe-Zalil-Modifikator ausgewählt ist unter Chlorbenzhydrylmethacrylat, Pentachlorphenylmethacrylat, *o*-Chlorstyrol, *p*-Divinylbenzol, N-Vinylphthalimid, 2-Naphthylmethacrylat, 1-Naphthylcarbinylmethacrylat, Fluorenylmethacrylat, Vinylthiophen, 1-Naphthylmethacrylat, Bleidimethacrylat, Vinylnaphthalin und N-Vinylcarbazol.

**21.** Verfahren nach einem der Ansprüche 12 bis 19, **dadurch gekennzeichnet, daß** der Abbe-Zahl-Modifikator bzw. das Abbe-Zahl-Modifikationsmittel ausgewählt ist unter Dibenzofuran, Benzalacetophenon, Naphthalin, Benzalazin, Benzoesäureanhydrid und Dibenzophenon.

## Claims

**1.** Transparent article with radial gradient refractive index, comprising a matrix made of a first transparent polymer having a first refractive index $n_1$ and a first Abbe number $\upsilon_1$, a second transparent polymer, diffused into the first polymer in order to produce the radial gradient index and having a second refractive index $n_2$, different than the first refractive index, and a second Abbe number $\upsilon_2$, **characterized in that** it furthermore comprises an effective amount of an Abbe number modifier agent which reduces by at least 10%, preferably by at least 15%, and more preferably by at least 20%, the value of the Abbe number of that of the first or second polymer which has the refractive index with lower value.

**2.** Transparent article according to claim 1, **characterized in that** the Abbe number modifier agent has an Abbe number less than or equal to 30.

**3.** Transparent article according to claim 1 or 2, **characterized in that** it comprises up to 30% by weight, preferably 10 to 25 % by weight, of Abbe number modifier agent relative to the total weight of the polymer having the refractive index with lower value.

**4.** Transparent article according to any one of the preceding claims, **characterized in that** the Abbe number modifier agents are selected from monofunctional monomers which are reactive with respect to precursor monomers of that of the first and second transparent polymers which has the refractive index with lower value, and from nonreactive aromatic compounds.

**5.** Transparent article according to claim 4, **characterized in that** the reactive Abbe number modifier agents are selected from chlorobenzhydryl methacrylate, pentachlorophenyl methacrylate, ochlorostyrene, p-divinylbenzene, N-vinylphthalimide, 2-naphthyl methacrylate, lnaphthylcarbinyl methacrylate, fluoronyl methacrylate, vinylthiophene, 1-naphthyl methacrylate, lead dimethacrylate, vinylnaphthalene and N-vinylcarbazole.

**6.** Transparent article according to claim 4, **characterized in that** the nonreactive Abbe number modifier agents are

selected from dibenzofuran, benzalacetophenone, naphthalene, benzalazine, benzoic anhydride and dibenzophenone.

7. Transparent article according to any one of the preceding claims, **characterized in that** the Abbe number modifier agent has a refractive index about 1.6.

8. Transparent article according to any one of the preceding claims, **characterized in that** the first transparent polymer is the polymer having the refractive index with lower value.

9. Transparent article according to any one of claims 1 to 7, **characterized in that** the second transparent polymer is the polymer having the refractive index with lower value.

10. Transparent article according to any one of the preceding claims, **characterized in that** the transparent polymer having the refractive index with lower value is a poly(alkyl or haloalkyl (meth)acrylate).

11. Transparent article according to any one of the preceding, claims, **characterized in that** the transparent polymer having the refractive index with higher value is polystyrene, a poly(aryl (meth)acrylate) or a poly(halogenated aryl (meth)acrylate).

12. Process for manufacturing a transparent article with radial gradient refractive index, comprising the steps of:

(a) making a mixture of an effective amount of an Abbe number modifier agent and precursor monomers of a first transparent polymer having a first refractive index and a first Abbe number, the Abbe, number modifier agent reducing the Abbe number of the first transparent polymer by at least 10%;
(b) obtaining a predetermined amount of precursor monomers of a second transparent polymer having a second refractive index, greater than the first refractive index, and a second Abbe number;
(c) placing either the product resulting from step (a) or the product resulting from step (b) between the parts of a two-part mold;
(d) partially polymerizing the product arranged in the mold in order to obtain a gel;
(e) diffusing the remaining one of the products obtained in step (a) or step (b) into the gel obtained in step (d); and
(f) completing the polymerization in order to obtain the transparent article with radial index gradient.

13. Process according to claim 12, **characterized in that** the polymerizations in steps (d) and (f) are photopolymerizations, and **in that** at least the mixture obtained in step (a) comprises a photopplymerization initiator.

14. Process according to claim 12 or 13, **characterized in that** at least the mixture obtained in step (a) furthermore comprises a cross linking agent.

15. Process according to any one of claims 12 to 14, **characterized in that** the mixture from step (a) is arranged between the two parts of the mold.

16. Process according to any one of claims 12 to 15, **characterized in that** the amount of Abbe number modifier agent represents up to 30%, preferably 10 to 25%, by weight relative to the weight of the precursor monomers of the first transparent polymer.

17. Process according to any one of claims 12 to 16, **characterized in that** the precursor monomers of the first transparent polymer are selected from alkyl and haloalkyl (meth)acrylates.

18. Process according to any one of claims 12 to 17, **characterized in that** the precursor monomers of the second transparent polymer are selected from: styrene, aryl (meth)acrylates and halogenated aryl (meth)acrylates.

19. Process according to any one of claims 12 to 18, **characterized in that** the Abbe number modifier agent has an Abbe number less than or equal to 30.

20. Process according to any one of claims 12 to 19, **characterized in that** the Abbe number modifier agent is selected from chlorobenzhydryl, methacrylate, pentachlorophenyl methacrylate, o-chlorostyrene, p-divinylbenzene, N-vinylphthalimide, 2-naphthyl methacrylate, 1-naphthylcarbinyl methacrylate, fluoronyl methacrylate, vinylthiophene,

1-naphthyl methacrylate, lead dimethacrylate, vinylnaphthalene and N-vinylcarbazole.

**21.** Process according to any one of claims 12 to 19, **characterized in that** the Abbe number modifier agent is selected from dibenzofuran, benzalacetophenone, naphthalene, benzalazine, benzoic anhydride and dibenzophenone.

FIG.1

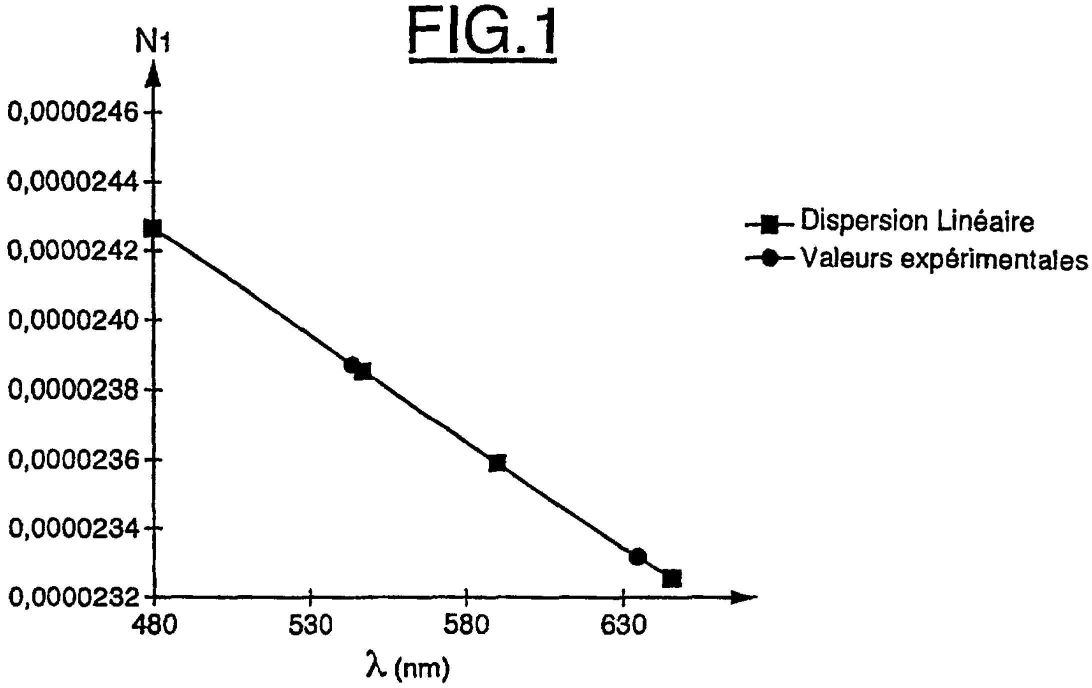
N1
0,0000246
0,0000244
0,0000242
0,0000240
0,0000238
0,0000236
0,0000234
0,0000232
480
530
580
630
λ (nm)
Dispersion Linéaire
Valeurs expérimentales

FIG.2

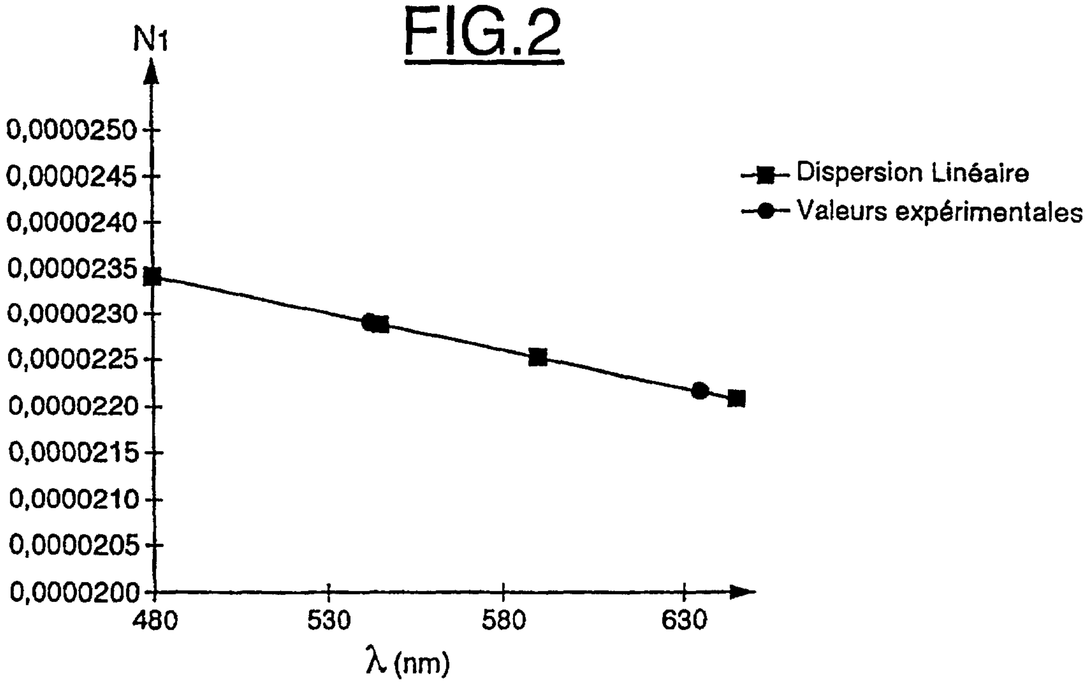
N1
0,0000250
0,0000245
0,0000240
0,0000235
0,0000230
0,0000225
0,0000220
0,0000215
0,0000210
0,0000205
0,0000200
480
530
580
630
λ (nm)
Dispersion Linéaire
Valeurs expérimentales